# EUROPEAN PATENT APPLICATION

(11) **EP 2 508 078 A1**
(43) Date of publication of application: **10.10.2012**
(21) Application number: 09851892.1
(22) Date of filing: 17.12.2009
(51) Int. Cl.: A23D 9/02

(54) **PREPARATION METHOD OF FATS AND OILS FOR CHOCOLATE AND CONFECTIONERY BY ENZYMATIC TRANSESTERIFICATION**

(30) Priority: 04.12.2009 KR 20090119846
(71) Applicant: CJ CheilJedang Corporation, Jung-gu Seoul 100-749 (KR)
(72) Inventor: LEE, Yun-Jeong, Incheon 402-201 (KR); LEE, Sang-Bum, Seoul 152-070 (KR); KIM, Yun-Sik, Seoul 150-834 (KR); KIM, Mi-Jung, Seongnam-si Gyeonggi-do 462-836 (KR); PARK, Seung-Won, Yongin-si Gyeonggi-do 446-742 (KR); LEE, Kang-Pyo, Seoul 131-140 (KR)
(74) Representative: Bosch, Matthias
(86) International application number: PCT/KR2009/007566
(87) International publication number: WO 2011/068275

(57) **Abstract**

The present invention relates to a method of preparing fat having a high POS content which includes preparing a raw material fat by mixing a vegetable fat with fatty acid or a fatty acid derivative; enzymatically transesterifying the raw material fat; removing the fatty acid or the fatty acid derivative from the enzymatically transesterified raw material fat; and performing dry fractionation or solvent fractionation on the fat from which the fatty acid or fatty acid derivative has been removed to eliminate crystallized fractions. The fat according to the present invention not only provides effects of enhancing physical properties and blooming resistance of chocolate but improves commercial value due to an increased POS content as compared with conventional replacement fats for cocoa butter. Further, the fat may raise the value of natural cocoa butter regarded as low-grade and provide effects of developing a fat composition which can be used as filling cream having soft texture and is nutritionally excellent.

## Description

### [Technical Field]

The present invention relates to a method of preparing fat for chocolate and confectionery through enzymatic transesterification and more particularly to a method of preparing fat having a high POS content which includes preparing a raw material fat by mixing a fractionated vegetable fat with fatty acid or a fatty acid derivative; enzymatically transesterifying the raw material fat; removing the fatty acid or the fatty acid derivative from the enzymatically transesterified raw material fat; and performing dry fractionation or solvent fractionation on the fat from which the fatty acid or fatty acid derivative have been removed to eliminate crystallized fractions, and fat for chocolate and confectionery prepared by the same.

### [Background Art]

### 1. Cocoa butter

Chocolate generally contains 50% or less of sugar, 30 to 50% of cocoa mass, and about 30% of fat including milk fat. The content of cocoa butter among chocolate fat varies according to the kind of chocolate, but is generally about 60%.

Cocoa butter (cacao butter) is fat obtained from the seed (cacao bean, fat content: 48 to 49%) of theobroma cacao fruit. Cocoa butter consists of 98% of triglyceride, 1% of free fatty acid, 0.5% of monoglyceride or diglyceride, 0.2% of sterol, and 150 to 250 ppm of tocopherol. Triglyceride of cocoa butter has a structure which is 75% or more symmetrical and in which oleic acid is located at the sn-2 position and palmitic acid and stearic acid are located at the sn-1 and sn-3 positions, respectively. Cocoa butter includes 34 to 49% of POS, 23 to 30% of SOS, and 13 to 17% of POP, which mainly form a symmetrical structure.

Cocoa butter has a melting point of 32 to 35°C and a solid fat content (SFC) of 71 to 88% at room temperature about 20°C, starts melting at 30 to 32°C, and substantially melts at 32 to 35°C. Since cocoa butter rapidly melts at around 30°C, cocoa butter is solid at room temperature, whereas it quickly melts in the mouth and thus provides refreshing and neat mouth-feel. It is known that such melting characteristics of cocoa butter are due to the symmetrical structure.

Cocoa butter has different compositions and contents of triglyceride depending on place of origin, which cause differences in properties, such as solidity, solidification speed, or the like. For example, as for compositions of symmetric fat having oleic acid in the sn-2 position, Malaysian cocoa butter has a POS content of 47% and an SOS content of 30%, while Brazilian cocoa butter has a POS content of 40% and an SOS content of 22% and Ghanaian cocoa butter has a POS content of 43% and an SOS content of 26%. These three cocoa butters have similar POP contents ranging from 13 to 15%. Regarding solidity, Malaysian cocoa butter is the solidest, Brazilian is the softest, and Ghanaian has a medium level of solidity. Further, solidification speed is different in the same order as solidity, which is 78 ± 10 minutes in Malaysian cocoa butter, 300 ± 51 minutes in Brazilian cocoa butter, and 95 ± 14 minutes Ghanaian cocoa butter.

### 2. Replacement fats for cocoa butter

Since cocoa butter is obtained from a natural plant, supply thereof changes according to weather changes. Further, since cocoa butter is expensive, vegetable fat and oil are used for chocolate as a substitute for cocoa butter. Such substitute fats include hardened palm kernel oil and coconut oil, which are not compatible with cocoa butter. Substitute fat and oil for cocoa butter is classified into a cocoa butter equivalent and extender (CBE), a cocoa butter replacer (CBR), and a cocoa butter substitute (CBS) depending on production methods and constituents.

The CBE is compatible with cocoa butter, has a similar triglyceride composition to cocoa butter, and requires tempering. Examples of the CBE include a palm middle fraction (PMF), Sal fat, Borneo tallow, Kokum butter, Shea butter, and fat fractions thereof. It is known that cocoa butter is mixed with a palm middle fraction and fat having a high SOS content to prepare fat similar to cocoa butter.

The CBR is solidified fat obtained by hardening soybean oil, canola oil, palm oil, or the like in a liquid state or in a liquid and solid mixed state at room temperature. The CBR can replace cocoa butter to a certain extent and does not require tempering. The CBR has a steep slope of an SFC curve and high oxidation stability due to increase in melting point and SFC. However, since the CBR is prepared using part hardening, it has a high content of trans acid and thus is nutritionally deficient.

The CBS is obtained by hardening some of vegetable oil and fat, is not compatible with cocoa butter, has a high content of lauric acid, and does not require tempering. The CBS is commonly used for coating in the baking field and is generally prepared by hardening or transesterifying palm kernel oil and coconut oil and, as necessary, mixing with other types of hardened vegetable oil. However, in the presence of moisture, fat and oil having a high content of lauric acid are hydrolyzed due to mold, emit abnormal odor, and are nutritionally deficient due to lauric acid.

Since CBR and CBS are nutritionally deficient and exhibit decreased functions associated with texture, e.g., they quickly melt in the mouth, CBE is increasingly used. CBE is mostly prepared by mixing SOS rich fat synthesized via enzymatic esterification with a palm mid-fraction (PMF) obtained by fractionation of palm oil at about 1:1. A CBE generally has a triglyceride composition consisting of 30 to 35% of POP, 10 to 15% of POS, and 30 to 35% of SOS, which has a higher content of POP and SOS and a lower content of POS than the triglyceride composition of Ghanaian cocoa butter (POP: 17%, POS: 43% SOS: 26%).

Physical properties of fat are identified through solid fat content (SFC) at different temperatures. SFC between 20 and 25°C denotes hardness of fat, SFC between 25 and 30°C denotes heat resistance, and SFC at 35°C or more denotes waxiness, which refers to an extent to which fat remains without quickly melting in the mouth. Cocoa butter or cocoa butter replacement fat used for chocolate is considered to have good quality when their SFC is high at 30°C or less, sharply decreases at 30°C or more, and is very low at 35°C or more, i.e. when SFC forms a steep curve.

Comparing the SFC of cocoa butter with that of the CBE, the CBE having a high SOS content has a lower SFC at 30°C or less than the cocoa butter. However, the CBE having a high SOS content has a higher SFC at 30°C or more than cocoa butter, and thus has solid feel and leaves a substantial aftertaste in the mouth. As described above, difference in SFC between the cocoa butter and the CBE, i.e. property difference, is due to difference in triglyceride composition between the cocoa butter and the CBE. The CBE has a high content of POP and SOS, whereas the cocoa butte has a high POS content. POS and POP have melting points around 35°C, while SOS has a melting point of 41°C. Fat having a high SOS content is relatively hard at 30°C or more (Aleksandra Torbica et al., Eur. Food Res Technol., 2006, 222:385-391).

Recently, there is a trend toward chocolate which is soft rather than hard and is neat without leaving an aftertaste since it quickly melts in the mouth. Accordingly, a soft CBE which has decreased SOS content and increased PMF content has been developed. The soft CBE has a triglyceride composition including 40 to 45% of POP, 10 to 15% of POS, and 30 to 35% of SOS. The soft CBE has a low SFC overall in a temperature range of 20 to 35°C, and thus it can provide soft-texture chocolate but does not form solid crystals at room temperature, which may cause a blooming phenomenon.

Most of the currently available CBEs are allowed to have hard or soft properties by adjusting a mixed ratio between SOS obtained through synthesis or fractionation and PMF having a high POP content. However, the CBEs do not exhibit an SFC curve having a steep slope, unlike natural cocoa butter.

US Patent No. 4,705,692 discloses a substitute composition for cocoa butter which includes SOS, POS, and POP and has a high SOS content, in which the ratio of stearic acid to palmitic acid is 1.5:1 to 6.0:1.

JP Patent Publication No. 1999-243982 discloses fat having a triglyceride composition with a high POS content, produced by transesterification, wherein POS content is low, 18 wt% or less, whereas POP content is high, 10 to 55 wt%, and SOS content is high, 10 to 50 wt%. In this respect, the process focuses on synthesizing SOS rather than POS.

JP Patent Publication No. 2008-154555 discloses fat and oil for chocolate having proper heat resistance and meltability in the mouth, wherein the fat and oil has an SOS content of 40 to 60 wt%, a POP content of 1 to 10 wt%, and a weight ratio of SOS content/the sum of POS and SOA contents of 1.1 to 1.8, and the SOS content is greater than the sum of the POS and SOA contents. Thus, the fat and oil include a high SOS content.

These conventional methods focus on fat and oil for chocolate having a high SOS content in order to produce chocolate products which are soft and quickly melt in the mouth and thus do not leave an aftertaste, whereas they do not put emphasis on POS abundant in natural cocoa butter.

Thus, the inventors of the present invention have conducted extensive studies to overcome problems of conventional methods of producing chocolate products which are soft and quickly melt in the mouth and thus do not leave an aftertaste. As a result, they prepared fat having a high content of POS abundant in natural cocoa butter and identified that it can be used for chocolate and confectioneries, thereby achieving the present invention.

### [Disclosure]

### [Technical Problem]

The present invention is aimed at providing a method of preparing fat having a high POS content by enzymatic transesterification of vegetable fat or oil.

Further, the present invention is aimed at providing fat having a high POS content for chocolate and confectionery using the method.

### [Technical Solution]

The foregoing aspects of the present invention are achieved by preparing fat having a high POS content by enzymatic transesterification of vegetable fat or oil and removing fractions having a high melting point through analysis of the triglyceride structure and melting point of the fat to thereby produce fat having a POS content of 50% or higher.

The present invention provides a method of preparing fat for chocolate and confectionery using enzymatic transesterification.

The method includes preparing a raw material fat by mixing vegetable fat or oil with fatty acid and a fatty acid derivative; enzymatically transesterifying the raw material fat; removing the fatty acid and the fatty acid derivative from the enzymatically transesterified raw material fat; and performing dry fractionation or solvent fractionation upon the fat from which the fatty acid or fatty acid derivative has been removed to eliminate crystallized fractions.

In the present invention, the vegetable fat or oil, which is vegetable fat or oil or fat or oil containing a fraction thereof, includes any vegetable fat or oil generally used in the art, e.g., coconut oil, palm kernel oil, palm oil, canola oil, sun flower oil, soybean oil, cotton seed oil, rice kernel oil, corn oil, olive oil, shea fat, mango kernel fat, Borneo tallow (oil from Shorea stenoptera or Pentadema butyracea), Sal oil (Sherea robusta oil), kokum oil (Garcinia indica oil), and fractions thereof, preferably palm oil and fractions thereof, without being limited thereto.

In the present invention, a process of fractionating vegetable fat or oil is to obtain a POP containing fat having content difference in saturated fatty acids and unsaturated fatty acids from vegetable fat or oil raw materials and may be conducted by a method selected from dry fractionation and solvent fractionation depending on characteristics of vegetable fat or oil raw materials. In solvent fractionation, any solvent, e.g., hexane, acetone, methyl ethyl ketone, ethanol, or the like, may be used as long as it can dissolve raw material fat.

In the present invention, examples of the fatty acid or the fatty acid derivative may include palmitic acid, stearic acid, arachidonic acid, behenic acid, and derivatives thereof, such as palmitic acid ethyl ester, stearic acid ethyl ester, arachidonic acid ethyl ester, behenic acid ethyl ester, palmitic acid methyl ester, stearic acid methyl ester, arachidonic acid methyl ester, and behenic acid methyl ester. Preferably, stearic acid, stearic acid ethyl ester, and stearic acid methyl ester are used, without being limited thereto. Any fatty acid and any fatty acid derivative generally used in the art may be used.

In the present invention, the raw material fat may be prepared by mixing the vegetable fat or oil with the fatty acid or the fatty acid derivative at a ratio of 1:0.5 to 1:10.

In the present invention, the enzymatic transesterification may be used to produce symmetric triglyceride including saturated fatty acids in the sn-1,3 positions and unsaturated acid in the sn-2 position and be conducted at 30 to 60°C for 1 to 30 hours using an sn-1,3 specific enzyme.

Examples of the sn-1,3 specific enzyme may include enzymes extracted from Rhizopus delemar, Mucor miehei, Aspergillus miger, Rhizopus arrhizus, Rhizopus niveus, Mucor javanicus, Rhizopus javenicus, Rhizopus oryzae, Thermomyces lanuginosus, or the like. Preferably, enzymes extracted from Mucor miehei or Thermomyces lanuginosus are used, without being limited thereto. Any enzyme specific to the sn-1 and 3 positions used in the art may be used.

The product obtained through enzymatic transesterification is distilled at 0.001 to 30 mbar and 100 to 300°C, preferably 0.001 to 10 mbar and 150 to 250°C to remove the fatty acid or the fatty acid derivative. Through the process of removing the fatty acid or the fatty acid derivative after enzymatic transesterification, 98% triglyceride may be obtained, thereby producing a uniform product as compared with POS fat obtained through fractionation of natural fat. Further, byproducts generated during enzymatic transesterification may be recycled as a substrate in enzymatic transesterification, thereby achieving cost efficiency.

The product obtained through enzymatic transesterification may be subjected to a process selected from dry fractionation and solvent fractionation. In solvent fractionation, any solvent, e.g., hexane, acetone, methyl ethyl ketone, ethanol, or the like, may be used as long as it can dissolve the raw material fat. In solvent fractionation, manufacturing efficiency may be adjusted depending on the concentration of a fat solution obtained by dissolving the fat in a solvent. The amount of the solvent used is 1 to 20 times, preferably 1 to 10 times that of the fat. Through dry fractionation and solvent fractionation, the fat solution is left at 0 to 35°C for about 1 to 10 hours until it crystallizes. When crystallization is sufficiently realized, a solid is separated from a liquid and crystallized fractions are removed using a filter. Such fractionation may be carried out once or twice. In the present invention, fractionation is performed once, thereby obtaining fat having a high POS content of 50% or higher.

### [Advantageous Effects]

Fat having a high POS content obtained by a method according to the present invention may be mixed with a vegetable fat or a fraction thereof, e.g., a hard PMF and Sal fat, thereby providing similar physical properties to cocoa butter.

Accordingly, the fat not only provides effects of enhancing physical properties and blooming resistance of chocolate but improves commercial value due to an increased POS content as compared with conventional replacement fats for cocoa butter. Further, the fat may raise the value of natural cocoa butter regarded as low-grade and provide effects of developing a fat composition which can be used as a filling cream having soft texture and is nutritionally excellent.

### [Description of Drawings]

Fig. 1 is a flowchart illustrating the entire processes of a preparation method according to the present invention;
Fig. 2 is a flowchart illustrating fractionation of palm oil in fractionating a raw material fat according to the present invention; and
Fig. 3 is a graph depicting the analysis result of the triglyceride composition of a product obtained through enzymatic transesterification according to the present invention.

### [Mode for Invention]

Hereinafter, the present invention will be described in more detail with reference to the following examples. These examples are provided for illustrative purposes only and are not to be in any way construed as limiting the present invention.

### Example 1: Fractionation of raw material fat

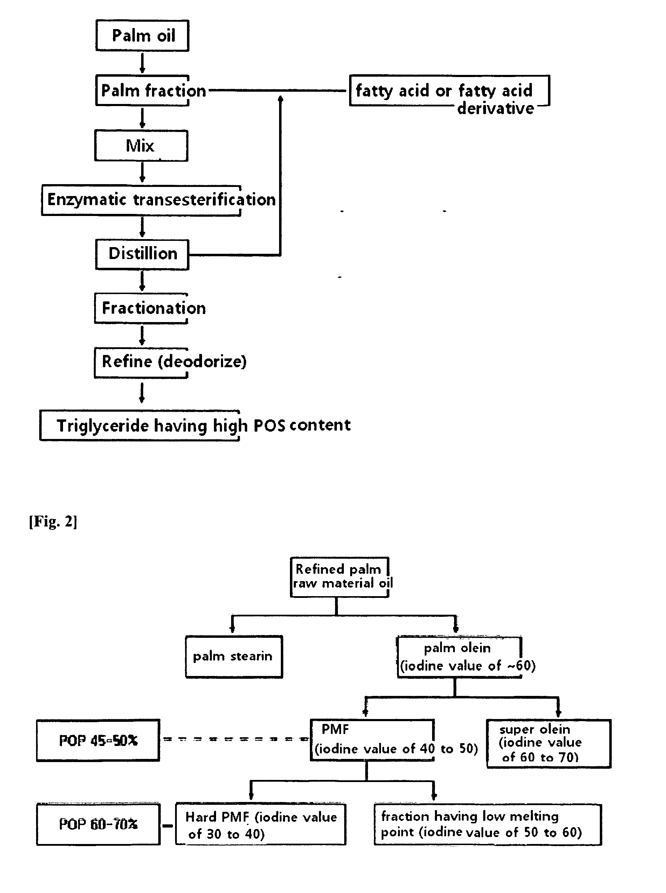

In Example 1, a POP containing fat was obtained using vegetable fat or oil as a raw material by solvent fractionation and dry fractionation (see Fig. 2).

First, in solvent fractionation, 1 kg of palm oil was completely dissolved at 60°C and mixed with 10 kg of acetone. After the container was closed with a stopper so that acetone was not volatilized, the mixture was stirred so that the oil was thoroughly dissolved in acetone. The mixed solution was stirred at 0°C and 30 rpm for 3 hours and then crystallized, followed by vacuum filtration, thereby separating into palm stearin in a solid state and palm olein in a liquid state. Here, the palm olein had a yield of 60% or more and an iodine value of 60 or less.

The acetone-unremoved palm stearin obtained through fractionation was completely dissolved at 40°C and mixed with additional acetone. The mixture was stirred at 30°C and 30 rpm and then crystallized, followed by vacuum filtration, thereby being separated into a crystallized fraction and a palm middle fraction (PMF). Here, the PMF had a yield of 30% or more, and a POP containing fat having 55% of POP and an iodine value of 40 was obtained.

In dry fractionation, 1 kg of palm oil was completely dissolved at 60°C and stirred at 25°C and 30 rpm for 30 hours and then crystallized, followed by vacuum filtration, thereby being separated into palm stearin in a solid state and palm olein in a liquid state. Here, the palm olein had a yield of 75% or more and an iodine value of 60 or less.

The palm olein obtained through fractionation was completely dissolved at 60°C and stirred at 15°C and 30 rpm for 25 hours and then crystallized, followed by vacuum filtration, thereby separating into a PMF in a solid state and super olein in a liquid state. Here, the PMF had a yield of 55%, and a POP containing fat having an iodine value of 50 was obtained.

### Example 2: Enzymatic transesterification

In Example 2, the POP containing fat prepared in Example 1 was mixed with stearic acid and a stearic derivative at a ratio of 1:5.

The mixture was mixed with an enzyme separated from Rhizomucor miehei and Thermomyces lanuginosus and subjected to transesterification in a reactor equipped with a stirrer (stirring transesterification). Separately from the stirring transesterification, the raw material mixture was subjected to transesterification by continuously passing through a double jacket-type column filled with an enzyme (continuous transesterification). Here, the reaction was conducted at a constant temperature of 50°C. Accordingly, fat having a POP content of 50% or higher was obtained.

### Experimental Example 1: Analysis of triglyceride structure

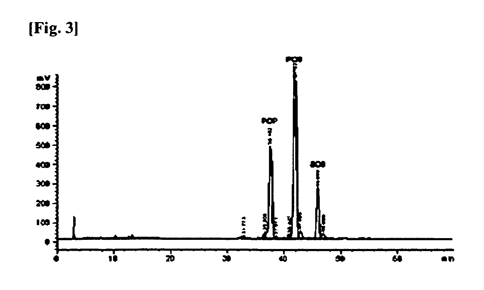

The fats obtained by stirring transesterification and continuous transesterification in Example 2 were evaluated as to the composition and content of triglyceride (see Fig. 3 and Table 2).

The composition and content of triglyceride were analyzed using high-performance liquid chromatography (HPLC). Analysis was conducted under conditions listed in Table 1. The triglyceride structures of the fats before and after fractionation were analyzed using reverse-phase high-performance liquid chromatography and an evaporative light scattering detector (ELSD). 30 µl of a specimen and 10 ml of hexane were filtered using a PEFE syringe filter (25 mm, 0.2 µm) and then put in a 2-ml vial, and 20 µl of the specimen was injected using an autosampler. Acetonitrile and hexane/isopropyl alcohol were used as a solvent A and a solvent B, respectively, and a flow rate was 1 ml/min. Solvent gradient elution (A:B, v:v) was conducted for 70 minutes, which was performed at 80:20 for 45 minutes, at 54:46 up to 60 minutes, and then at 80:20 from 60 minutes to 70 minutes.

**TABLE 1**

| Equipment | Agilent, 1200 HPLC Chemstation |
|---|---|
| Column | NOVA-pack C18 60 Å 4 µm (3.9 x 150 mm, Waters) |
| Detector | Alltech, Evaporative Light Scattering Detector (ELSD) |
| Sample amount | 20 µl |
| Solvent | Acetonitrile:hexane/isopropyl alcohol Gradient solvent system |
| Detector gain | 1 |
| Detector oven temperature | 80°C |
| Carrier gas | N₂ (1.5 L/min) |

The triglyceride compositions of the fats obtained in Example 2 are illustrated in Table 2.
POP: 1,3-dipalmitoyl-2-oleoyl glycerol
POS: 1-palmitoyl-2-oleyl-3-stearoylglycerol
SOS: 1,3-distearoyl-2-oleoylglycerol

**TABLE 2**

| | POP | POS | SOS |
|---|---|---|---|
| Reactant substrate | 86.2 | 8.2 | 0.3 |
| Stirring transesterification | 27.6 | 51.1 | 15.6 |
| Continuous transesterification | 29.4 | 50.8 | 14.7 |

The substrate has a POS content of 8.2% before the reaction, and the fat obtained using the substrate via stirring transesterification has a POS content of 49.7% and an SOS content of 17.6%. Also, the fat obtained via continuous transesterification has a POS content of 50.8% and an SOS content of 14.7%, which are similar to the results of stirring transesterification.

### Example 3: Elimination of fatty acid or fatty acid derivative

In Example 3, the fat obtained via transesterification in Example 2 was distilled at 0.001 mbar and 250°C, thereby removing the stearic acid or the stearic acid derivative.

### Experimental Example 2: Analysis of triglyceride content

The fat from which the stearic acid or the stearic acid derivative was removed in Example 3 was evaluated as to the composition of triglyceride using TLC-FID.

TLC-FID allows quantitative and qualitative analysis of an organic mixture separated by thin layer chromatography (TLC). In analysis, a high-purity reagent (Sigma Chemicals) was used as a solvent. About 1 µl of a sample dissolved in the solvent was spotted on a chromaload (a quartz rod to which silica or alumina is thinly and securely applied at high temperature so that the sample is separated and developed) designed specifically for TLC-FID. The sample was developed in a tub containing a developing solvent for 20 minutes, followed by completely drying the solvent in a dry oven and analysis using TLC-FID. Analysis using TLC-FID was conducted under the conditions listed in Table 3.

**TABLE 3**

| TLC-FID equipment | IATRON IATROSCAN MK-5 |
|---|---|
| Detector | FID(Flame Ionization Detect) FPD(Frame Photometric Detect) |
| Sample amount | 1 µℓ |
| Flow rate of hydrogen gas | 160 ml/min |
| Flow rate of air | 2 ml/min |
| Scanning speed | 30 sec |

As a result of analysis under the foregoing conditions, the fats obtained in Example 3 have a triglyceride content of 98% or higher.

### Example 4: Crystallization and elimination of crystallized fraction

The fat from which the fatty acid or fatty acid derivative has been removed in Example 3 was crystallized to remove crystallized fractions by solvent fractionation and dry fractionation.

In solvent fractionation, 1 kg of the fat obtained in Example 3 was mixed with 10 kg of acetone. After the container was closed with a stopper so that the acetone was not volatilized, the mixture was stirred so that the fat was thoroughly dissolved in the acetone. The mixed solution was stirred at 0°C and 30 rpm for 3 hours and crystallized, followed by vacuum filtration, thereby being separated into fat in a solid state and fat in a liquid state.

Acetone contained in the separated solid and the separated liquid was removed by vacuum distillation. Here, the filtrated fat in the liquid state had a yield of 80% or more, and fat having a POS content of 50% or more from which crystallized fat had been removed was obtained.

Characteristics of the crystallized fraction-removed fat were identified through analysis of the melting point thereof (see Table 6).

In dry fractionation, 1 kg of the fat obtained in Example 3 was completely dissolved at 60°C by stirring and cooled to 20°C. Then, the fat was stirred at 20°C and 30 rpm for 20 hours and crystallized, followed by vacuum filtration, thereby separating into fat in a solid state and fat in a liquid state.

The filtrated fat in the liquid state had a yield of 60% , and fat having a POS content of 50% or more from which crystallized fat had been removed was obtained. Characteristics of the crystallized fraction-removed fat were identified through analysis of the melting point thereof (see Table 7).

### Experimental Example 3: Analysis of structure and melting point of triglyceride

The triglyceride composition and content of each fat obtained via solvent fractionation and dry fractionation in Example 4 were analyzed.

Analysis of the triglyceride composition and content was conducted using HPLC under conditions listed in Table 4. The triglyceride structure of the fat before and after fractionation was analyzed using reverse-phase high-performance liquid chromatography and an evaporative light scattering detector (ELSD). 30 µl of a specimen and 10 ml of hexane were filtered using a PEFE syringe filter (25 mm, 0.2 µm) and then put in a 2-ml vial, and 20 µl of the specimen was injected using an autosampler. Acetonitrile and hexane/isopropyl alcohol were used as a solvent A and a solvent B, respectively, and flow rate was 1 ml/min. Solvent gradient elution (A:B, v:v) was conducted for 70 minutes, which was performed at 80:20 for 45 minutes, at 54:46 up to 60 minutes, and then at 80:20 from 60 minutes to 70 minutes.

**TABLE 4**

| Equipment | Agilent, 1200 HPLC Chemstation |
|---|---|
| Column | NOVA-pack C18 60 Å 4 µm (3.9 x 150 mm, Waters) |
| Detector | Alltech, Evaporative Light Scattering Detector (ELSD) |
| Sample amount | 20 µl |
| Solvent | Acetonitrile:hexane/isopropyl alcohol Gradient solvent system |
| Detector gain | 1 |
| Detector oven temperature | 80°C |
| Carrier gas | N₂ (1.5 L/min) |

The melting point of triglyceride in each fat obtained via solvent fractionation and dry fractionation·in Example 4 was measured using an automatic raising melting point tester, EX-871. A sample thoroughly melted was put in a capillary tube to about 1 cm, and the tube was put in a stand and left for about 10 minutes in a freezer. Then, the sample was put in a sensor and fixed, and then placed in a prepared tank containing 10°C distilled water to measure the melting point. Temperature was raised at 2°C/min from 10 to 25°C, and then at 0.5°C/min after 25°C. The melting point was evaluated using the automatic raising melting point tester under conditions listed in Table 5.

**TABLE 5**

| Equipment | Automatic raising melting point tester, EX-871 |
|---|---|
| Temperature rising | 0.5°C/min |
| Number of samples | 8 |
| Pretreatment conditions | -5°C (10 minutes) |
| Detection system | Detection using special photoelectric sensor |
| Heating device | Special coil-type heating heater 400 W |
| Stirring device | Variable speed motor |

**TABLE 6**

| | Triglyceride composition (area %) | | | Melting point (°C) |
|---|---|---|---|---|
| | POP | POS | SOS | - |
| Before crystallization and elimination of crystallized fraction | 29.4 | 50.8 | 14.7 | 40.2 |
| After crystallization and elimination of crystallized fraction | 28.1 | 51.3 | 14.9 | 34.4 |

The triglyceride composition and melting point of the fat obtained via solvent fractionation are illustrated in Table 6. As a result of analysis, major triglycerides, POP, POS, and SOS, did not remarkably change in composition. However, the melting point of the fat was 40.2°C before fractionation, but changed to 35.5°C after fractionation, which shows that fractions having a high melting point have been removed.

**TABLE 7**

| | Triglyceride composition (area %) | | | Melting point (°C) |
|---|---|---|---|---|
| | POP | POS | SOS | - |
| Before crystallization and elimination of crystallized fraction | 29.4 | 50.8 | 14.7 | 40.2 |
| After crystallization and elimination of crystallized fraction | 29.3 | 51.2 | 15.3 | 34.6 |

The triglyceride composition and melting point of the fat obtained via dry fractionation are illustrated in Table 7. As a result of analysis, major triglycerides, POP, POS, and SOS, did not remarkably change in composition. However, the melting point of the fat was 40.4°C before fractionation, but changed to 34.6°C after fractionation, which shows that fractions having a high melting point have been removed.

Through the aforementioned processes, fat having a high POS content (50% or more) is obtained.

## Claims

1. A method of preparing fat having a high POS content comprising:
enzymatically transesterifying a raw material fat prepared by mixing a vegetable fat with fatty acid or a fatty acid derivative;
removing the fatty acid or the fatty acid derivative from the enzymatically transesterified raw material fat; and
performing fractionation on the fat from which the fatty acid or fatty acid derivative are removed and eliminating crystallized fractions.

2. The method according to claim 1, wherein the vegetable fat comprises a vegetable fat containing POP or fat containing a fraction thereof.

3. The method according to claim 1, wherein the raw material fat comprises a mixture of the vegetable fat with the fatty acid or fatty acid derivative at a ratio of 1:0.5 to 1:10.

4. The method according to claim 1, wherein the enzymatic transesterification is conducted at 30 to 60°C.

5. The method according to claim 1, wherein the removing the fatty acid or the fatty acid derivative from the enzymatically transesterified raw material fat is conducted at 0.001 to 30 mbar and 100 to 300°C.

6. The method according to claim 1, wherein the eliminating the crystallized fractions is conducted by maintaining a fat solution at 0 to 50°C.

7. A cocoa butter equivalent comprising the fat prepared according to any one of claims 1 to 6.
